# EUROPEAN PATENT SPECIFICATION

(11) **EP 0 733 322 B1**
(45) Date of publication and mention of the grant of the patent: **19.04.2000**
(21) Application number: 96200769.6
(22) Date of filing: 22.03.1996
(51) Int. Cl.: A47B 91/02, F16M 7/00

(54) **Improved leveling device in particular for furniture pieces**
Höhenverstellbare Vorrichtung, insbesondere für Möbelteile
Dispositif de mise à niveau, en particulier pour élément de mobilier

(30) Priority: 24.03.1995 IT MI950211 U
(43) Date of publication of application: 25.09.1996
(73) Proprietor: LEONARDO S.r.l., 22060 Figino Serenza, Como (IT)
(72) Inventor: Cattaneo, Carlo, 22060 Figino Serenza (Como) (IT)
(74) Representative: Martegani, Franco

(56) References cited:
- EP-A- 0 292 921
- EP-A- 0 393 473
- EP-A- 0 503 701
- DE-A- 2 433 520
- US-A- 1 387 390
- US-A- 1 632 383
- US-A- 2 295 911
- US-A- 5 169 259

## Description

The present invention relates to some interesting improvement supplied in leveling devices of known type, in particular for furniture pieces.

EP-A-393,473 discloses a leveling device for furniture pieces comprising, in combination:
- an externally contoured base, or foot, element, from which a screw-threaded stem extends;
- a cylindrical actuation organ inmeshing on said screw-threaded stem, and provided with a crown gear at one of its ends;
- a container element stably engaged with said cylindrical actuation organ, so as to axially move together with it, and displaying a radial opening aligned with the crown gear of said actuation organ.

The adjustment of the leveling device in height is carried out by entering a cross-head screwdriver through said opening provided through the wall of the container element, so as to get said screwdriver into engagement with the crown gear of the actuation organ, which can thereby be rotated, causing it to axially move relatively to the leveling foot.

A leveling device of this type is complex and expensive to manufacture, above all if said device must be manufactured with different sizes (i.e., lengths) mainly when hindrances have to be overcome inside the furniture piece, such as hinges, shelves, and so forth.

Furthermore, actuating the device can be difficult if a screwdriver with proper size is not available or if the operator meets with difficulties in producing the coupling, which must be carried out according to a perpendicular axis to the axis of the crown gear.

EP-A-503,701 discloses a leveling device comprising a foot which can be adjusted in height by means of a screw-nut screw mechanism which is housed inside a seat provided inside a part of the furniture piece and can be actuated from the interior of said furniture piece, wherein said adjustment mechanism is operatively linked with a remote actuation device which can be manipulated from the interior of the furniture piece.

Although it displays the great advantage of being capable of being manufactued in one single size -- thanks to the possibility of installing the remote actuation device in a zone of the furniture piece which is free from hindrances caused by the presence of hinges or shelves -- such a type of mechanism is also relatively complex and expensive to manufacture.

Therefore, the purpose of the present invention is of obviating the drawbacks which affect the prior art by providing a leveling device which satisfactorily meets the required functional requirements, while simultaneously displaying an acceptable manufacturing cost.

The above purpose is achieved by a leveling device displaying the characteristics recited in the appended claims.

The structural and functional characteristics and features of the leveling device according to the present invention and the advantages thereof over the prior art will still be clearer from a study of the following disclosure made by referring to the accompanying drawings which display an example of a leveling device incorporating the innovative principles of the same invention.

In the drawings:

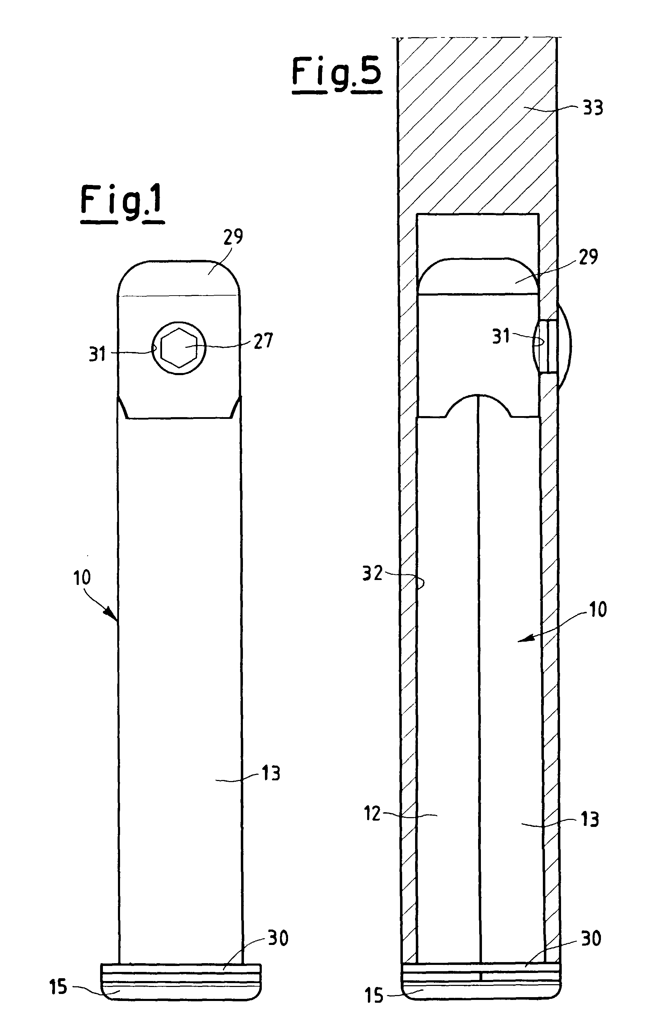

Figure 1 displays an elevation view illustrating the leveling device according to the present invention;

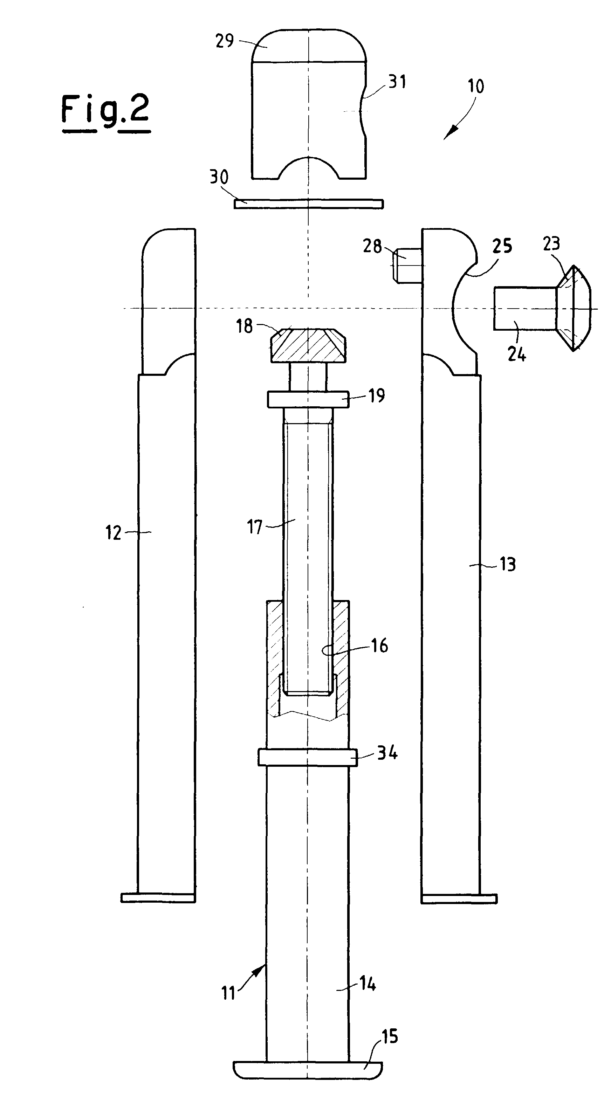

Figure 2 displays an exploded view of the leveling device of figure 1;
Figure 3 displays a longitudinal sectional view of the leveling device in its completely retracted position;
Figure 4 displays a longitudinal sectional view of the leveling device in its completely outwards extended position; and
Figure 5 displays the leveling device of the present invention installed inside the shoulder of a furniture piece.

Referring to the drawings, the leveling device of the present invention is generally indicated with (10) and is structurally formed by a mechanism (11) which is characteristically enclosed inside the interior volume defined by a pair of half-shells of elongated shape (12, 13), of substantially cylindrical shape.

The mechanism (11) comprises a tubular foot (14), e.g., with an elliptical cross section, with an enlarged base (15) and a screw-threaded bore (i.e., a nut screw) (16) opposite to the base (15). Inside said threaded bore (16) a screw-threaded rod or stem (screw) (17) inmeshes which ends with a crown gear (18). Nearby said crown gear (18) said threaded stem (17) has a collar (19) housed inside a corresponding ring-shaped groove (20) provided in the half-shells (12, 13).

In a similar way, the crown gear (18) is housed inside a corresponding seat (21) provided in the half-shells (12, 13).

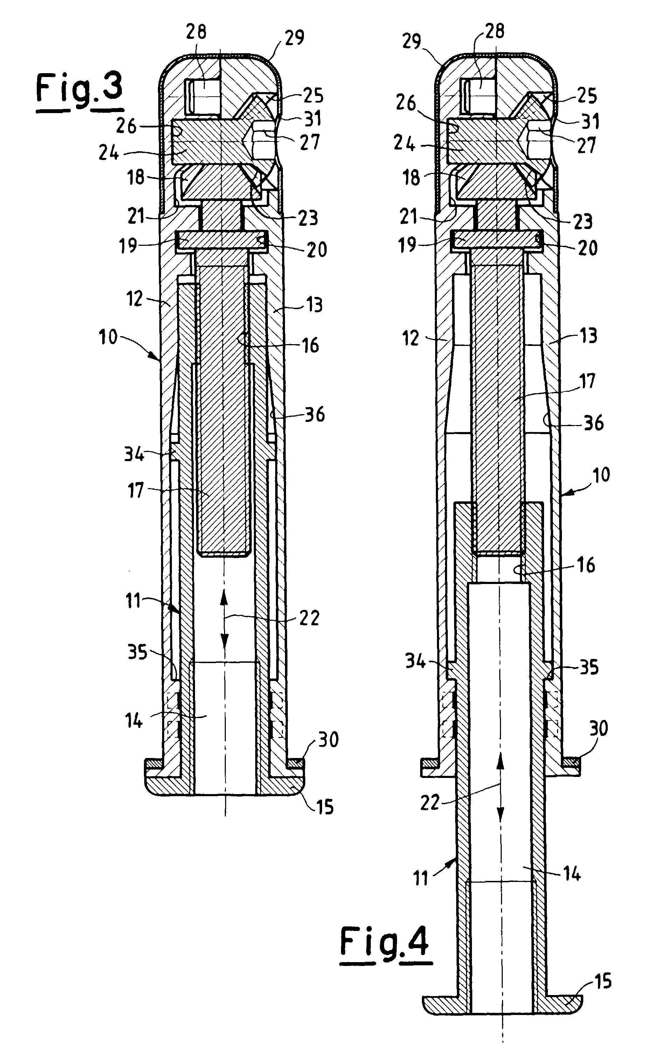

In this way, the stem (17) can rotate inside the half-shells (12, 13), while simultaneously remaining constrained to them, and being prevented from performing translational movements in the direction of arrow (22) (Figures 3 and 4).

The crown gear (18) and consequently the stem (17) are driven to rotate by means of a pinion (23) enbloc manufactured at an end of a shaft (24).

The enbloc whole constituted by the pinion (23) and the shaft (24) are positively supported for rotation inside respective seats (25, 26) provided in the half-shells (13, 12).

The pinion (23) can be driven to rotate by means of an Allen key or a cross-head screwdriver to be entered inside a corresponding hollow (27) provided in the body of said pinion (23).

As one will clearly see from the drawings, the half-shells (12, 13) are stably coupled with each other by means of an inner pin (28) and an outer cap (29) and, at the other end, by means of an outer washer (30). The cap (29) is perforated in (31) to allow access to the pinion (23).

The reference numeral (34) indicates a stroke-limit ring-like collar integral with the foot (14), which cooperates with opposite shoulders (35, 36) provided inside the half-shells (12, 13).

The leveling device according to the present invention is designed to be installed inside a corresponding seat (32) provided inside part (33) of a furniture piece, and its operating way will be clearly understood from the disclosed hereinabove made by referring to the drawings.

In fact, in order to level a furniture piece, it will be enough that the operator drives the pinion (23) to rotate, thereby causing the foot (14) to translate relatively to the half-shells (12, 13), as shown by figures 3, 4.

Thanks to its half-shell (12,13) based structure, the leveling device according to the present invention can be easily manufactured with different lengths.

## Claims

1. Leveling device for furniture pieces comprising a foot which can be adjusted in height by means of a screw (17)-nut screw (16) adjusting mechanism which is housed inside a seat (32) provided inside a part (33) of said furniture piece and which can be actuated from the interior of said furniture piece by means of an actuation device, characterized in that said adjustment mechanism and said actuation device are housed inside a pair of half-shells of elongated shape (12, 13).

2. Leveling device according to claim 1, characterized in that said actuation device is constituted by a crown gear (18) provided at the free end of said screw (17) with which crown gear (18) a pinion (23) is coupled which is provided at the end of a stem (24), with said crown gear (18), pinion (23) and stem (24) being housed for rotation inside respective seats (21, 25, 26) provided inside said half-shells (12, 13), said pinion (23) furthermore showing a hollow (27) for a radially insertable actuation tool

3. Leveling device according to claim 1, characterized in that said half-shells are stably coupled with each other at an end by means of an inner pin (28) and an outer cap (29), and, at the other end, by means of an outer washer (30).

4. Leveling device according to claim 1, characterized in that a stroke-limit ring-shaped collar (34) is integral with said foot (14) and said stroke-limit ring-shaped collar (34) cooperates with stroke limit shoulders (35, 36) provided inside said half-shells (12, 13).

## Patentansprüche

1. Höhenverstellvorrichtung für Möbelstücke mit einem Fuß, dessen Höhe mittels eines Schraube-(17)-Mutter-(16)-Verstellmechanismus eingestellt werden kann, der im Inneren eines Sitzes (32) untergebracht ist, der im Inneren eines Teils (33) des Möbelstücks vorgesehen ist, und der vom Inneren des Möbelstücks aus mittels einer Betätigungsvorrichtung betätigt werden kann,
dadurch gekennzeichnet, daß der Verstellmechanismus und die Betätigungsvorrichtung im Inneren eines Paares Halbschalen mit länglicher Form (12, 13) untergebracht sind.

2. Höhenverstellvorrichtung nach Anspruch 1,
dadurch gekennzeichnet, daß die Betätigungsvorrichtung durch ein Kronenrad (18) gebildet ist, das an dem freien Ende der Schraube (17) vorgesehen ist, wobei mit diesem Kronenrad (18) ein Ritzel (23) gekoppelt ist, das am Ende eines Schaftes (24) vorgesehen ist, wobei das Kronenrad (18), das Ritzel (23) und der Schaft (24) zur Drehung im Inneren jeweiliger Sitze (21, 25, 26) untergebracht sind, die im Inneren der Halbschalen (12, 13) vorgesehen sind, wobei das Ritzel (23) außerdem eine Aushöhlung (27) für ein radial einführbares Betätigungswerkzeug aufweist.

3. Höhenverstellvorrichtung nach Anspruch 1,
dadurch gekennzeichnet, daß die Halbschalen an einem Ende mittels eines inneren Stiftes (28) und einer äußeren Kappe (29), und an dem anderen Ende mittels einer äußeren Scheibe (30) stabil miteinander gekoppelt sind.

4. Höhenverstellvorrichtung nach Anspruch 1,
dadurch gekennzeichnet, daß ein ringförmiger Hubbegrenzungsbund (34) einstückig mit dem Fuß (14) ausgebildet ist, und der ringförmige Hubbegrenzungsbund (34) mit Hubbegrenzungsschultern (35, 36) zusammenwirkt, die im Inneren der Halbschalen (12, 13) vorgesehen sind.

## Revendications

1. Dispositif de mise à niveau pour éléments de mobilier comprenant un pied qui peut être réglé en hauteur au moyen d'un mécanisme de réglage à vis (17)-écrou (16) qui est placé à l'intérieur d'un logement (32) prévu à l'intérieur d'une partie (33) dudit élément de mobilier et qui peut être actionné de l'intérieur dudit élément de mobilier à l'aide d'un dispositif d'actionnement, caractérisé en ce que ledit mécanisme de réglage et ledit dispositif d'actionnement sont logés à l'intérieur d'une paire de demi-manchons (12, 13) de forme allongée.

2. Dispositif de mise à niveau selon la revendication 1, caractérisé en ce que ledit dispositif d'actionnement est constitué d'une roue plate (18) prévue au niveau de l'extrémité libre de ladite vis (17), laquelle roue plate (18) est couplée avec un pignon (23) prévu à l'extrémité d'une tige (24), lesdits roue plate (18), pignon (23) et tige (24) étant logés pour la rotation à l'intérieur de logements respectifs (21, 25, 26) prévus à l'intérieur desdits demi-manchons (12, 13), ledit pignon (23) présentant en outre une cavité (27) destinée à un outil d'actionnement insérable radialement.

3. Dispositif de mise à niveau selon la revendication 1, caractérisé en ce que lesdits demi-manchons sont couplés de manière stable l'un à l'autre à une extrémité à l'aide d'un axe intérieur (28) et d'un chapeau extérieur (29), et, à l'autre extrémité, à l'aide d'une rondelle extérieure (30).

4. Dispositif de mise à niveau selon la revendication 1, caractérisé en ce qu'un collier (34) limiteur de course en forme d'anneau est réalisé d'un seul tenant avec ledit pied (14), et ledit collier (34) limiteur de course en forme d'anneau coopère avec des épaulements (35, 36) limiteurs de course prévus à l'intérieur desdits demi-manchons (12, 13).
